Europäisches Patentamt

**European Patent Office**

**Office européen des brevets**

(11) Publication number: **0 125 836**
**A2**

## (12) EUROPEAN PATENT APPLICATION

(21) Application number: **84302962.0**

(22) Date of filing: **02.05.84**

(51) Int. Cl.³: **G 09 B 19/02**

(30) Priority: **06.05.83 GB 8312577**
**27.05.83 GB 8314819**
**11.07.83 GB 8318690**

(43) Date of publication of application:
**21.11.84 Bulletin 84/47**

(84) Designated Contracting States:
**AT BE CH DE FR GB IT LI LU NL SE**

(71) Applicant: **O'Malley, Arthur Robert**
**39 Pound Road**
**Bursledon Southampton(GB)**

(72) Inventor: **O'Malley, Arthur Robert**
**39 Pound Road**
**Bursledon Southampton(GB)**

(74) Representative: **Crampton, Keith John Allen et al,**
**D YOUNG & CO 10 Staple Inn**
**London WC1V 7RD(GB)**

(54) Teaching aid.

(57) A teaching aid for mathematics comprises a bearing member 1 on which are mounted at least one spool 8, 9 around which a flexible line is wound; a scale that measures the amount of line pulled out, the scale being actuated either mechanically or electrically by rotation of the or a spool 8, 9 during at least part of each revolution of the spool; a protractor 2, preferably having at least one arm 3, 4 pivoted at its centre, the protractor being weighted so that when the protractor is vertical, a base line of the protractor is horizontal.

FIG.1

1

## TEACHING AID.

This invention relates to teaching aids useful in mathematics. The teaching of pure and applied mathematics has long presented problems to pedagogues. In particular, the related branches geometry and trigonometry were at one time almost exclusively taught in schools on a purely theoretical basis and only vaguely related to the practicalities of such uses as surveying and navigation. In more recent years, more practical methods of teaching have been sought, but useful teaching aids are not readily available.

Suitable teaching aids would enable trigonometry, geometry and various branches of applied mathematics to be taught in such a manner that a student could study both mathematical processes and their resultant functions in their proper setting and in realistic dimensions. To do this, it is essential that modern teaching be freed from the false dimensions imposed by the use of rule and exercise book and the traditional 'plane' method by which the subjects are taught and in which a great deal of both teachers' and students' time is occupied in the drawing of geometrical shapes in a plane surface. A great deal more of their time is devoted to proving by theorem the form that a flat shape would assume in its natural dimensions. In view of the nature of the instruments used in its implementation, this method of tuition will continue until freed by modern apparatus capable of benefiting education by removing the abstract element and replacing it with reality.

In my prior United Kingdom specification No. GB-A-2,115,969 I describe and claim a teaching aid comprising a conventional electronic calculator of the type that includes trigonometrical functions, in combination with a pair of pivotally connected arms, one of which is preferably fixed with respect to the calculator, and means included in the circuit of the calculator for registering, on the actuation of an appropriate key, the angle between the arms or a trigonometrical function of that angle. This device, which may also include a means for measuring lengths, is useful in teaching the trigonometrical functions of angles and their uses, but has no practical use in the teaching of applied mathematics.

The present invention provides a teaching aid for mathematics comprising a bearing member on which are mounted at least one spool around which a flexible line can be wound; a scale that measures the amount of line pulled out, the scale being actuated by rotation of the or a spool during at least part of each revolution of the spool; and a protractor carrying a biasing weight so that when the protractor is vertical, a base line of the protractor is horizontal. The base line, when produced in one direction, may coincide with the point at which the line leaves the bearing member.

The scale is preferably marked on a disc, a small part of the marked disc being visible through an aperture or window located within the circular area of the 360 ° protractor. The disc may then be rotated by contact with a shoe on the circumference of a spool carrying a single strand of the line, the shoe forming part of annulus that increases the radius of the spool over a small sector of it. Thus, as the line is pulled out by an amount corresponding to the circumference of the spool, the shoe will come into contact with the disc bearing the scale once and will rotate that disc correspondingly to the circumferential length of the shoe. Alternatively each rotation of the spool may momentarily close an electric circuit and thereby actuate a counter such as an electronic calculator. A second (storage) spool will carry that part of the line that has not been unwound. Means may be included to vary the direction of the line and suitably position it, and to re-wind the line on the storage spool.

Examples of teaching aids in accordance with the present invention are shown in the accompanying drawings, in which:

Fig. 1 shows a view from above, but with the various parts superimposed on one another, of one embodiment of the invention;

Fig. 2 shows a side view indicating the vertical arrangement of the various parts of the embodiment shown in Fig. 1;

Fig. 3 shows a partially exploded section through part of another embodiment of the invention and is a section on the line III-III in

Fig. 4, which is a view from below of part of the same embodiment;

Fig. 5 is an end view (arrows V in Figs. 3 and 4) of the same embodiment;

Fig. 6 is a detail of part of Fig. 3.

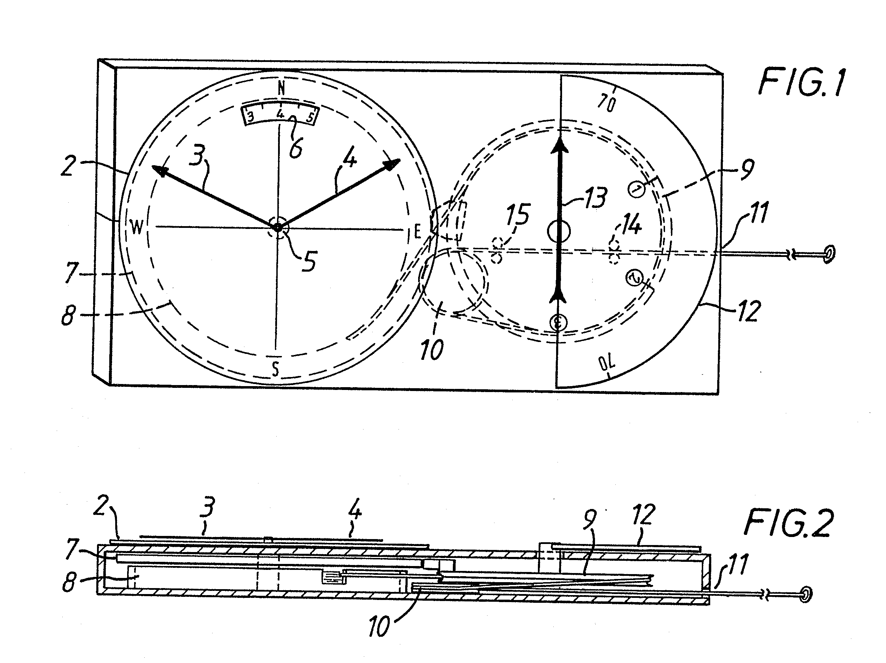

In Figs. 1 and 2 of the drawings, a rectangular block 1 forms a bearing member, which bears all the other items which are either fixedly or movably attached to it. Member 1 may be backed by a conventional calculator.

A 360° protractor 2 is fixed to or marked on the block 1. It bears two arms 3, 4 pivotally mounted at its centre 5. The four compass points north, south, east and west are marked on the protractor. In the circle formed by protractor 2 is a window 6 through which may be read numerals on a rotatable disc 7 below but concentric with protractor 2. Beneath disc 7 is a storage spool 8 for a flexible line (shown as a dotted line in Fig. 1). The line passes from the storage spool 8 and encircles a circumferential groove in an activating spool 9 which bears a part-annular shoe round $7\frac{1}{2}$° of its circumference. As the spool 9 rotates as a result of the line's being pulled, the shoe engages frictionally with rotatable disc 7 and causes it to rotate through $7\frac{1}{2}$°, which moves the next number into the centre of the window 6, thus counting the number of revolutions of spool 9. If the circumference of the latter is one unit (e.g. six inches), the number in the window will indicate the number of units of line pulled out.

From spool 9 the line returns to spool 8, which it partly encircles and then passes to a grooved spool 10, which it encircles and then leaves the calculator at 11, where a pair of small guide posts is provided for the line. Spool 10 can be omitted if desired. Further guides in the form of pairs of posts are also provided as shown at 14 and 15. The line may have a small bead fitted at its outer end in order to facilitate holding it and to prevent its being drawn right back into the bearing member. Means are provided to hold the line with a given length pulled out.

Semicircular protractor 12 is situated where shown and is pivotable about its origin. This may be calibrated from -70° to +70° (the last 20° of the right angles being excluded from calibration. An arrow 13 on the face of this protractor can enable the distance the string is pulled to be more accurately measured. This arrow rotates with disc 9.

In an especially preferred form, the 360° protractor 2 has a display aperture equal to 34° of its circumference. The two pivotally connected arms 3, 4 have a common endpoint 5, one of the arms being so designed that it can engage the other and move it to any required position and then return to any position necessary to physically illustrate the trigonometric definition of angles. Protractor 2 is vertically weighted beneath the point of support to give it stable equilibrium.

Rotatable disc 7 is 2.75 inches (7 cm) in diameter and 1/8 inch (0.32 cm) thick. It is marked with numerals in a circular pattern 1 to 24 at 15° intervals, each interval being marked as an inch measurement. The axle aperture is fitted with a sleeve 1/16 inch (0.16 cm) each side to hold the axle preventing uncontrolled movement. Its controlled movement is caused by intermittent contact with the shoe upon its outer perimeter, which has a length equalling $7\frac{1}{2}°$ of the circumference of disc 7. Each rotation of spool 9 thus results in a circular movement of disc 7 equal to six inches on its scale.

Member 1 may be in the form of a rectangular lid that can be removed from a second flat rectangular member, the spindles on which the various rotating members turn engaging with corresponding spindles by a male-female joint on the second member. In particular, the angular position of protractor 2 may be fixed (the effect of the equilibrating weight thus being overcome) by preventing its angular movement by frictionally engaging such a male-female joint by thumb pressure, the part of the joint on the second member being non-rotatable. The second member can be a calculator.

The rectangular members are about 3 inches by 6 inches (7.62 cm by 15.24 cm) with the diameters of the protractors about 3 inches.

The teaching aid of the present invention can be used not only to measure distances and angles but also demonstrate various physical laws including those relating to pendulums and to friction. It provides the facility for doing this with a single pocket-sized piece of apparatus.

The teaching aid may have retractable sights with sighting apertures set into the protractor, but sighting apertures are preferably provided in the protractor itself, since this is a much simpler method of construction. A sighting aperture could for example extend along a diameter of the protractor, preferably from end to end.

By taking a bearing through the sighting apertures, a student can, by holding the teaching aid with the protractor vertical, ascertain the angle of elevation of the top of a given building, tree or the like. This angle can be temporarily retained by preventing relative rotation of the protractor and the bearing member, as described above, thus being more easily and accurately readable.

Alternatively, vertical angles can be measured to less distant objects by using the line and finding the direction it takes to reach a given point as opposed to the W-E line on protractor 2. Horizontal angles can be determined in analogous manner. Distances are measured by the withdrawal of the measuring line from the instrument, which simultaneously activates disc 7 and spool 9. Each rotation of spool 9 registers the withdrawal of six inches (15.24 cm) of line by moving disc 7 that distance in a clockwise direction by intermittent contact with the shoe upon its perimeter. Spool 9 is scaled 1 to 24 at $7\frac{1}{2}$ ° intervals, which alternately register each six-inch and twelve-inch withdrawal of line in feet and inches by moving beneath the aperture in protractor 2 to a distance of twenty-four feet. Measurement in inches and tenths is provided by the arrow on spool 9 moving clockwise over the 1 to 3 scale printed upon protractor 11 (which is a 180 ° protractor), the first three inches being indicated by the arrowhead, the fourth, fifth and sixth inches by the reverse end of the arrow. Metric measurements can of course be read off instead of inches.

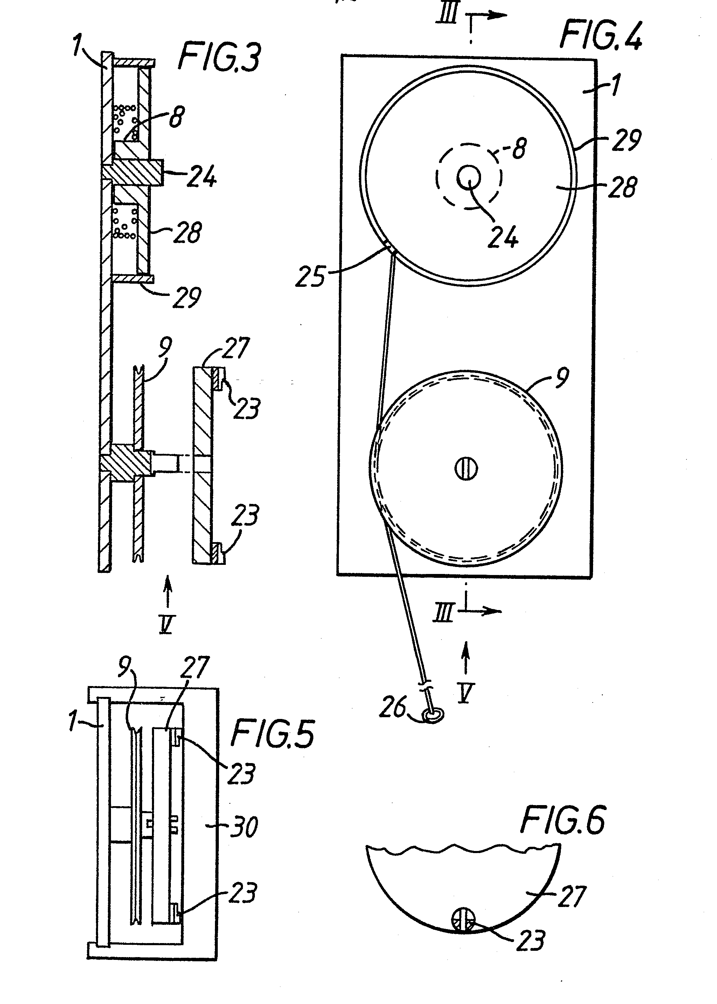

An alternative device embodying the invention is shown in Figs. 3 to 6 of the drawings. The bearing member 1 forms a lid that can be slid onto a flat electronic calculator 30 (shown only in Fig. 5) and the activating spool 9 is adapted to actuate the calculator so that the display on the calculator indicates the amount of rotation of the disc, thus replacing the disc 7. The lid is transparent and overlaps the calculator 30 so as to show 180 ° of protractor above the display.

Storage spool 8 is mounted on a fixed pivot 24 and is surrounded by an annular restraint 29 and covered by a disc 28 to retain the line, which can leave the spool only through aperture 25. The line surrounds disc 9, lying in the circumferential groove. The line is shown as having a ring 27 tied to the outer end to facilitate extending it and prevent its retracting too far. The line can be retracted by rotating the cover 28, and with it the spool by finger pressure. A weighted disc 27, shown only in Figs. 3 and 5, in the former being shown moved away from bearing member 1, is mounted coaxially with disc 9 and by remaining horizontal as the whole device is rotated in a vertical plane enables a sighting to be taken of the top of a distant object and the angle of elevation measured. This disc can also be used to demonstrate the principle of the pendulum.

However, a better way of demonstrating the pendulum is by extending the line and tying a weight to the end. A given length of line can be pulled out to demonstrate the effect of varying the length of a pendulum. The line is firmly clamped in the slit in member 24 to provide the pivot. Alternatively, the line may be clamped in a pair of diametrically opposite members 23 on disc 27. The shapes of these are shown in more detail in Fig. 6.

It is also possible to use the disc 9 as a pulley for demonstrating friction and measuring the coefficient of friction and, in conjunction with a timer, which could be included in the calculator or could be a separate electronic or clockwork chronometer, for investigating the speed and acceleration of falling bodies.

The disc 27 may bear a 360° protractor and may contain sighting means. However, the sights are preferably located on the bearing member 1, which is preferably made of transparent material and may overlap the end of the calculator so that a 180° protractor is visible above the calculator display with sighting apertures, preferably with crossed wires, in the 0-180° line of the protractor.

## CLAIMS

1.    A teaching aid for mathematics comprising a bearing member 1, on which are mounted at least one spool 8 around which a flexible line can be wound; characterized in that a scale 6 measures the amount of line pulled out, the scale being actuated by rotation of a spool 9 during at least part of each revolution of the spool; and a protractor 2, mounted on member 1, carries a biasing weight so that when the protractor 2 is vertical, a base line of the protractor is horizontal.

2.    A teaching aid as claimed in Claim 1 in which the protractor 2 is a 360° protractor and the scale is marked on a disc 7, a small part of the marked disc 7 being visible through an aperture or window 6 located within the circular area of the protractor 2.

3.    A teaching aid as claimed in Claim 2 in which the disc 7 is rotated by contact with a shoe on the circumference of a spool 9 carrying a single strand of the line, the  shoe forming part of annulus that increases the radius of the spool 9 over a small sector of it.

4.    A teaching aid as claimed in any one of Claims 1 to 3 in which the bearing member 1 is in the form of a rectangular lid that can be fastened to a rectangular member 30, thereby enclosing the spools 8,9.

5.    A teaching aid as claimed in Claim 4 in which the rectangular member 30 is a flat pocket-sized electronic rectangular calculator.

6.    A teaching aid as claimed in Claim 5 in which the scale for measuring the length of line pulled out is part of the calculator so that the calculator display shows the said length of line associated with an integral number of revolutions of the spool 9.

7.    A teaching aid as claimed in any one of Claims 1 to 6 in which a diametrally extending sighting aperture is provided in the protractor 2.

8

8.　　A teaching aid as claimed in any one of Claims 1 to 7 having a
storage spool 8 for the line mounted coaxially with the protractor.

9.　　A teaching aid as claimed in any one of Claims 1 to 8 having guide
means 11,14,15 for the line.

10.　　A teaching aid as claimed in any one of Claims 1 to 9 having one or
two arms 3,4 pivoted at the centre of the protractor.

FIG.1

FIG.2

0125836

0125836

FIG.3

FIG.4

FIG.5

FIG.6